# EUROPÄISCHE PATENTANMELDUNG

(11) **EP 4 733 982 A1**
(43) Veröffentlichungstag der Anmeldung: **29.04.2026**
(21) Anmeldenummer: 25209884.3
(22) Anmeldetag: 20.10.2025
(51) Int. Cl.: G06K 7/10, B65G 35/00, G03B 17/56

(54) **KAMERASYSTEM FÜR EINE ETIKETTENERKENNUNGSVORRICHTUNG**

(30) Priorität: 23.10.2024 EP 24208248
(71) Anmelder: SICK AG, 79183 Waldkirch (DE)
(72) Erfinder: JAECKLE, Andreas, 79108 Freiburg (DE); BURGER, Jannik, 79365 Rheinhausen (DE)
(74) Vertreter: Manitz Finsterwald Patent- und Rechtsanwaltspartnerschaft mbB

(57) **Zusammenfassung**

Die Erfindung betrifft ein Kamerasystem für eine Etikettenerkennungsvorrichtung, wobei das Kamerasystem dazu ausgebildet ist, 1D- und/oder 2D-Etikettencodes auf zumindest einem Objekt zu erkennen, welches durch eine Fördervorrichtung, insbesondere Förderband, bewegt wird. Das Kamerasystem weist eine Kameraeinheit mit einem Kameraobjektiv und einem Bildsensor sowie einen Prozessor auf, wobei die Kameraeinheit dazu ausgebildet ist, eine Abfolge von Bildern des Objektes aufzunehmen. Der Prozessor ist dazu ausgebildet, die Bilder zu verarbeiten und auf dem Objekt angeordnete 1D- und/oder 2D-Etikettencodes zu erkennen. Das Kamerasystem weist eine Schwenkvorrichtung auf, welche mit der Kameraeinheit, insbesondere lösbar, verbunden ist und dazu ausgebildet ist, die Kameraeinheit in zumindest einer Schwenkebene aus einer Ausgangslage um einen Schwenkwinkel zu verschwenken.

## Beschreibung

Die Erfindung betrifft ein Kamerasystem für eine Etikettenerkennungsvorrichtung, wobei das Kamerasystem dazu ausgebildet ist, 1D- und/oder 2D-Etikettencodes auf zumindest einem Objekt zu erkennen, welches durch eine Fördervorrichtung, insbesondere Förderband, bewegt wird, wobei das Kamerasystem eine Kameraeinheit mit einem Kameraobjektiv und einem Bildsensor sowie einen Prozessor aufweist, wobei die Kameraeinheit dazu ausgebildet ist, eine Abfolge von Bildern des Objektes aufzunehmen, und wobei der Prozessor dazu ausgebildet ist, die Bilder zu verarbeiten und auf dem Objekt angeordnete 1D- und/oder 2D-Etikettencodes zu erkennen.

Die Anwendung der Identifikation von 1D- und 2D-Etikettencodes auf Objekten, beispielsweise Paketen oder auch Paletten, die durch eine Fördervorrichtung wie einem Rollenförderer transportiert werden, ist von zentraler Bedeutung für Unternehmen in verschiedenen Branchen, insbesondere im Bereich der Logistik und Lagerhaltung. Ein Unternehmen, das einen umfangreichen Warenfluss bewältigt benötigt eine zuverlässige Methode zur Identifikation von Objekten während des Transports auf einer Fördervorrichtung. Die Identifikation erfolgt durch das Lesen von Etikettencodes auf den Objekten, die wichtige Informationen über den Inhalt, die Herkunft und das Ziel der Ware enthalten.

Kamerabasierte Codeleser für die automatische Identifikation von Objekten auf Fördervorrichtungen sind deshalb eine wichtige Technologie in der Logistik und Lagerverwaltung. Die Codeleser erfassen, insbesondere hochauflösende, Bilder der Objekte, analysieren sie mittels Bildverarbeitungsalgorithmen und erkennen präzise Etikettencodes wie 1D- oder 2D-Codes. Die extrahierten Daten werden in Echtzeit verarbeitet und in digitale Formate umgewandelt, welche von anderen Systemen genutzt werden können. Diese kamerabasierte Technologie automatisiert den Identifikationsprozess, verbessert die Effizienz des Lagerbetriebs und reduziert menschliche Fehler. Sie zeichnet sich durch Robustheit, Zuverlässigkeit und nahtlose Integration in bestehende Fördervorrichtungssysteme aus. Insgesamt ermöglichen kamerabasierte Codeleser eine effiziente und präzise Identifikation von bewegten Objekten und tragen zur Optimierung der Logistikprozesse bei.

Hierbei stellen sich vielfältige Herausforderungen wie beispielsweise die Verschiedenartigkeit der Code-Typen. Die verwendeten Etikettencodes können sowohl 1D-als auch 2D-Codes sein, darunter GS1 SSCC-Barcodes. Die Identifikationslösung muss in der Lage sein, verschiedene Code-Typen präzise zu lesen und zu interpretieren, um eine genaue Warenverfolgung zu gewährleisten. Weiterhin können Objekte wie Paletten je nach Region und Anwendungsbereich unterschiedliche Höhen und Breiten aufweisen. Diese Variabilität erfordert eine flexible Identifikationslösung, die in der Lage ist, Etikettencodes auf Objekten unterschiedlicher Höhen und Breiten genau zu erfassen und zu lesen. Da die Etikettencodes auf den Objekten auf allen Seiten der Objekte angeordnet sein können, muss das Codelesesystem in der Lage sein, eine 360 Grad Erfassung zu ermöglichen. So kann sichergestellt werden, dass alle Etikettencodes präzise erfasst werden, unabhängig von ihrer Anordnung auf dem Objekt. Darüber hinaus können sich auch die Objekte selbst auf der Fördervorrichtung in unterschiedlichen Positionen und Ausrichtungen befinden. Der Codeleser muss in der Lage sein, Etikettencodes unabhängig von der Position und Ausrichtung des Objektes genau zu identifizieren und zu lesen. Fördervorrichtungen wie Förderbänder können zudem mit hohen Fördergeschwindigkeiten betrieben werden, um einen effizienten Transport der Objekte zu ermöglichen. Hierbei müssen die Etikettencodes auch bei einem schnellen Transport und hohen Fördergeschwindigkeiten präzise zu erfassen und zu verarbeiten sein. Auch die Arbeitsumgebung, in der die Erfassung bzw. Identifikation der Etikettencodes stattfindet, verdient Beachtung. Sie kann variieren und zusätzliche Herausforderungen wie schlechte Beleuchtung, Staub oder Reflexionen beitragen. Die kamerabasierte Erfassung von Etikettencodes muss deshalb robust genug sein, um unter verschiedenen Umgebungsbedingungen zuverlässig zu arbeiten. Der Codeleser muss zudem ein ausreichend großes Sichtfeld haben, um alle Etikettencodes auf einem Objekt innerhalb einer Bildsequenz erfassen zu können, ohne dass zusätzliche Anpassungen der Position der Kameraeinheit erforderlich sind. Des Weiteren muss auch die Tiefenschärfe der Kameraeinheit ausreichend sein, um die Etikettencodes auf den Objekten ausreichend fokussieren zu können, und dies unabhängig von ihrer Position auf dem Objekt und ihrer Entfernung zur Kameraeinheit.

Bisherige Lösungen nach dem Stand der Technik nutzen kamerabasierte Lesegeräte mit einem steuerbaren Hochgeschwindigkeitsspiegel, um Etikettencodes auf sich bewegenden Objekten wie Paletten und großen Paketen auf Fördervorrichtungen wie beispielsweise Förderbändern zu lesen und zu identifizieren. Systeme mit derartigen Lesegeräten sind in der Lage, Etikettencodes mit einem einzelnen Lesegerät auch aus kurzen Arbeitsabständen und über ein breites Sichtfeld zu lesen. Nachteilig wirken sich bei derartigen Lesegeräten jedoch die hohen Anschaffungskosten aus, welche sich aus zusätzlicher Hardware und möglicherweise erforderlichen spezialisierten Schulungen ergeben. Zudem kann sich die Implementierung eines derartigen Systems als komplex erweisen und spezifisches Fachwissen erfordern, was Zeit und Ressourcen in Anspruch nehmen kann.

Es ist daher Aufgabe der Erfindung, ein verbessertes Kamerasystem für eine Etikettenerkennungsvorrichtung bereitzustellen, welches effizient, zuverlässig, verschleißarm und kostengünstig ist.

Die Aufgabe wird durch ein Kamerasystem mit den Merkmalen des Anspruchs 1 gelöst und insbesondere dadurch, dass das Kamerasystem eine

Schwenkvorrichtung aufweist, welche mit der Kameraeinheit, insbesondere lösbar, verbunden ist und dazu ausgebildet ist, die Kameraeinheit in zumindest einer Schwenkebene aus einer Ausgangslage um einen Schwenkwinkel zu verschwenken.

Durch das Verschwenken kann das durch oder auf der Fördervorrichtung bewegte Objekt durch die Kameraeinheit und deren Bildsensor in der Abfolge von Bildern bei verschiedenen Erfassungswinkeln erfasst werden, wobei sich die verschiedenen Erfassungswinkel aus dem Verschwenken des Bildfeldes der Kameraeinheit durch die Schwenkvorrichtung ergeben. Eine Aufnahme von Bildern des Objektes und die Erfassung der darauf angeordneten Etikettencodes bei verschiedenen Erfassungswinkeln der Kameraeinheit wird somit dadurch erreicht, dass die Kameraeinheit als Ganzes selbst verschwenkt wird. Die Aufnahme von Bildern des Objektes bei verschiedenen Erfassungswinkeln gewährleistet, dass ein auf dem Objekt angeordneter Etikettencode unabhängig von seiner Position und Ausrichtung auf dem Objekt und auch unabhängig von der Größe und Ausrichtung des Objektes in den Bildern erfasst wird. Die Bilder des Objektes werden an den Prozessor übermittelt, der sie verarbeitet und in den Bildern nach auf dem Objekt angeordneten 1D- und/oder 2D-Etikettencodes scannt, diese erkennt und sicher identifiziert.

Die Kameraeinheit bildet ein Codelesegerät, welches über die zum Erkennen der Etikettencodes notwendigen Funktionalitäten verfügt. Die Kameraeinheit verfügt insbesondere über ein eigenes Kameragehäuse, in welchem das Kameraobjektiv, der Bildsensor und der Prozessor angeordnet sein können. Zur Energieversorgung und/oder Datenübertragung können an der Außenseite des Kameragehäuses Anschlusseinrichtungen vorgesehen sein, an welche externe Strom- oder Datenverbindungen angeschlossen werden können. Die Kameraeinheit kann auch eine Beleuchtungseinrichtung, beispielsweise in Form von LED Lampen, aufweisen, welche an der Außenseite des Kameragehäuses angeordnet sind und eine Beleuchtung des Objektes ermöglichen.

Die Schwenkvorrichtung verschwenkt die Kameraeinheit bevorzugt als Ganzes. Die Schwenkvorrichtung verschwenkt insbesondere das Kameragehäuse mit den in dessen Innerem und an der Außenseite angeordneten Komponenten wie Kameraobjektiv, Bildsensor, Prozessor und Beleuchtungseinrichtung. Hierbei sind die Komponenten innerhalb des Kameragehäuses auch während des Verschwenkens starr angeordnet. Die relative Position von Kameragehäuse, Kameraobjektiv, Bildsensor, Prozessor und Beleuchtungseinrichtung bleibt daher auch während des Verschwenkens unverändert.

Da die Kameraeinheit selbst verschwenkt wird, entfällt die Notwendigkeit des Vorhaltens von steuerbaren Spiegeln, um Etikettencodes unabhängig von ihrer Anordnung und/oder Ausrichtung zu erkennen. Durch den Wegfall von Spiegeln, welche eingerichtet und während des Betriebs in einem sauberen Zustand gehalten werden müssen, ist das Kamerasystem einfach zu installieren, kostengünstig und wartungsarm. Des Weiteren ist durch den Verzicht auf zusätzliche optische Elemente wie steuerbare Spiegel die üblicherweise in die Kameraeinheit integrierte interne Beleuchtung ausreichend, um ausreichend ausgeleuchtete Bilder des Objektes für das Erkennen der Etikettencodes zu erhalten. Das Vorhalten einer zusätzlichen externen Beleuchtung ist somit nicht notwendig.

Durch die Schwenkvorrichtung wird eine zuverlässige und genaue Erfassung von Etikettencodes auf den Objekten gewährleistet, was die Effizienz und die Genauigkeit des Erkennens und der Identifikation verbessert. Durch die Schwenkvorrichtung wird es ermöglicht, die Kameraeinheit optimal auszurichten, um eine sichere Erfassung der Etikettencodes zu gewährleisten, selbst wenn die Objekte und/oder die Etikettencodes in verschiedenen Winkeln relativ zur Kameraeinheit angeordnet sind. Dadurch lassen sich die Objekte und die darauf angeordneten Etikettencodes unabhängig von Höhe und Breite der Objekte effizient erfassen.

Zur Erfassung der Etikettencodes auf den Objekten kann das Kamerasystem beispielsweise neben der Fördervorrichtung positioniert werden. Dies kann beispielsweise orthogonal zur Fördervorrichtung oder im 45° Winkel dazu erfolgen. Die Fördervorrichtung kann beispielsweise ein Förderband, einen Roboterarm, einen Hubwagen oder ein autonomes Transportfahrzeug (AGV) umfassen. Zur vollständigen Erfassung des 360° Winkels können Kamerasysteme auf beiden Seiten der Fördervorrichtung angeordnet werden. Somit kann ein auf einer Fördervorrichtung bewegtes Objekt unabhängig von dessen Höhe oder Breite vollständig erfasst werden und jeder auf dem Objekt angeordnete Etikettencode gesehen, erfasst, gelesen und durch den Prozessor identifiziert werden.

Die zumindest eine Schwenkebene kann in horizontaler Richtung und/oder in vertikaler Richtung relativ zur Fördervorrichtung verlaufen. Verfügt die Schwenkvorrichtung über zwei Schwenkebenen, die in horizontaler und in vertikaler Richtung verlaufen, kann das von der Kameraeinheit erfasste Bildfeld sowohl horizontal als auch vertikal vergrößert werden. Das Kamerasystem kann das Objekt damit sowohl horizontal, als auch vertikal effizient erfassen.

Das Kamerasystem kann ein Außengehäuse aufweisen, in welchem die Kameraeinheit und die Schwenkvorrichtung angeordnet und aufgenommen sind. Das Außengehäuse verfügt über zumindest ein transparentes Sichtfenster, welches es der Kameraeinheit ermöglicht, für jede Ausrichtung zwischen der Ausgangslage und dem maximalen Schwenkwinkel eine Abfolge von Bildern des Objektes aufzunehmen.

Das Außengehäuse kann an einem Konstruktionsprofil befestigbar sein. Das Konstruktionsprofil kann eine Befestigungsvorrichtung, beispielsweise eine Befestigungsplatte, aufweisen, welche es ermöglicht, das Außengehäuse vibrationssicher in einer Arbeitsumgebung zu fixieren. Das Außengehäuse kann an dem Konstruktionsprofil drehbar gelagert sein, um das Kamerasystem in verschiedenen Winkeln zur Fördervorrichtung ausrichten und fixieren zu können. Dies ermöglicht beispielsweise einen schnellen Wechsel zwischen einer Seitenablesung und einer 45 Grad Ablesung der bewegten Objekte, ohne dass langwierige Umbauten oder Änderungen an der Montierung des Kamerasystems notwendig sind.

Gemäß einer Ausführungsform ist eine der Schwenkebene zugeordnete Schwenkachse außerhalb der Kameraeinheit angeordnet. Die Schwenkachse erstreckt sich orthogonal zur Schwenkebene. Die Anordnung der Schwenkachse außerhalb der Kameraeinheit ermöglicht einen einfachen und kostengünstigen Aufbau der Schwenkvorrichtung.

Gemäß einer Ausführungsform weist die Schwenkvorrichtung ein Montagegehäuse, ein Antriebsglied und einen Motor, insbesondere Elektromotor, auf, wobei die Kameraeinheit an dem Montagegehäuse, insbesondere lösbar, fixiert ist, das Antriebsglied mit dem Montagegehäuse verbunden ist und das Antriebsglied durch den Motor antreibbar ist, um ein Verschwenken des Montagegehäuses und der Kameraeinheit zu bewirken. Das Verschwenken der Kameraeinheit wird somit über ein Verschwenken des Montagegehäuses bewirkt, wobei das Antriebsglied mit dem Montagegehäuse in einer Wirkverbindung steht. Das Antriebsglied ist somit dazu ausgebildet, bei Antrieb durch den Motor das Montagegehäuse in der Schwenkebene zu verschwenken. Der Motor ermöglicht hierbei eine präzise Bewegungssteuerung der Kameraeinheit, was zu einer gleichmäßigen und genauen Erfassung der Etikettencodes beiträgt. Das Montagegehäuse kann so ausgebildet sein, dass verschiedene Kameraeinheiten an ihm fixierbar sind. Dies ermöglich eine einfach durchzuführende Anpassung und/oder Optimierung des Kamerasystems an spezifische Erfordernisse der Anwendung. Vorteilhafterweise ist hierzu nicht ein Austausch des gesamten Kamerasystems notwendig. Vielmehr kann es ausreichen, eine Kameraeinheit durch eine andere Kameraeinheit zu ersetzen, welche beispielsweise eine höhere Auflösung aufweist oder deren Aufnahmeparameter besser für die aktuelle Anwendung geeignet ist.

Gemäß einer Ausführungsform ist die Schwenkvorrichtung dazu ausgebildet, die Kameraeinheit nach erfolgter Verschwenkung um den Schwenkwinkel in die Ausgangslage zurückzuführen. Die Schwenkvorrichtung ist somit dazu ausgebildet, eine automatische Schwingbewegung zwischen der Ausgangslage und einer maximal ausgeschwenkten Lage auszuführen. Beispielsweise kann das Antriebsglied bei Antrieb durch den Motor eine periodische Bewegung durchführen, welche sie nach einer vollständig durchlaufenen Periode wieder in ihre Ausgangslage zurückführt. Die automatische Schwingbewegung des Schwenkvorrichtung und der damit verbundenen Kameraeinheit verbessert die Effizienz der Erfassung der Etikettencodes, da sie eine gleichbleibend schnelle und kontinuierliche Bewegung der Kameraeinheit über die auf der Fördervorrichtung bewegten Objekte ermöglicht.

Gemäß einer Ausführungsform ist der Schwenkwinkel vorgebbar oder vorgegeben. Der Schwenkwinkel der Kameraeinheit und somit die Amplitude der Schwingung ist einstellbar. Dadurch können die von der Kameraeinheit erreichbaren Neigungswinkel eingestellt und die Bewegung der Kameraeinheit fein abgestimmt werden. Dies ermöglicht eine Anpassung an spezifische Anforderungen des Anwendungsgebiets, um optimale Ergebnisse der Erkennung der Etikettencodes durch das Kamerasystem zu erzielen.

Gemäß einer Ausführungsform ist die Schwenkvorrichtung dazu ausgebildet, die Kameraeinheit in der Schwenkebene mit einer vorgegebenen oder vorgebbaren Schwenkgeschwindigkeit zu verschwenken, insbesondere wobei die Schwenkgeschwindigkeit an die Fördergeschwindigkeit der Fördervorrichtung anpassbar ist. Alternativ oder zusätzlich zur anpassbaren Amplitude kann auch die Schwenkgeschwindigkeit und damit die Frequenz der Schwingung angepasst werden, um möglichst optimale Ergebnisse der Erkennung der Etikettencodes zu erreichen: Die Möglichkeit, die Amplitude und/oder die Frequenz der Schwingung anzupassen, ermöglicht es dem Anwender, die Bewegung der Kameraeinheit fein abzustimmen, um den spezifischen Anforderungen des jeweiligen Anwendungsgebiets gerecht zu werden und optimale Ergebnisse zu erzielen. Durch eine Anpassung der Schwenkgeschwindigkeit an die Fördergeschwindigkeit kann erreicht werden, dass das Objekt in den Bildern der von der Kameraeinheit erzeugten Abfolge von Bildern möglichst umfassend unter verschiedenen Blickwinkeln erfasst und abgebildet wird. Dies gewährleistet eine effiziente und zuverlässige Erfassung der Etikettencodes durch den Prozessor.

Gemäß einer Ausführungsform beträgt ein maximaler Schwenkwinkel 120 Grad, insbesondere 150 oder 180 Grad. Schwenkwinkel dieser Größe ermöglichen das zuverlässige Erkennen von Etikettencodes, die in verschiedensten Winkeln zur Ausgangslage der Kameraeinheit angeordnet sind. Zur vollständigen Erfassung des 360° Winkels können Kamerasysteme auf beiden Seiten der Fördervorrichtung angeordnet werden. Somit kann ein Objekt auf einer Fördervorrichtung, unabhängig von ihrer Höhe vollständig erfasst werden und jeder auf dem Objekt angeordnete Etikettencode gesehen, gelesen und identifiziert werden.

Gemäß einer Ausführungsform ist das Verschwenken der Kameraeinheit durch die Schwenkvorrichtung durch ein, insbesondere externes, Startsignal initiierbar. Mit anderen Worten ist die Schwenkvorrichtung über einen Trigger, beispielsweise eine an der Fördervorrichtung angeordnete Lichtschranke, triggerbar. Unmittelbar vor der Initiierung durch das Startsignal befinden sich die Schwenkvorrichtung und die Kameraeinheit in ihre jeweiligen Ausgangslagen in Ruhe. Das Startsignal triggert die Schwenkbewegung, woraufhin die Schwenkbewegung startet und die Schwenkvorrichtung und die Kameraeinheit sich aus ihren jeweiligen Ausgangslagen herausbewegen.

Gemäß einer Ausführungsform ist das Startsignal durch das bewegte Objekt auslösbar. Beispielsweise kann das Startsignal durch eine von dem Objekt durchlaufene Lichtschranke, ein von dem Objekt beaufschlagter Taster oder ein von dem Objekt beaufschlagter induktiver Sensor ausgelöst werden. Dies ermöglicht eine präzise Synchronisation der Bewegung des Objektes auf der Fördervorrichtung, der Schwenkbewegung der Kameraeinheit und der Aufnahme der Abfolge von Bildern. Bei erfolgter Anpassung der Schwenkgeschwindigkeit an die Fördergeschwindigkeit der Fördervorrichtung kann die Kameraeinheit dem Objekt folgen und während des Verschwenkens kontinuierlich in ihrem Blickfeld halten. Die dabei erzeugte Abfolge von Bildern zeigt folglich das Objekt bei sich kontinuierlich verändernden Blickwinkeln, wodurch sich die an dem Objekt angeordneten Etikettencodes effizient erfassen lassen. Die Initiierung der Schwenkbewegung durch das Objekt, beispielsweise mittels einer an der Fördervorrichtung angeordneten Lichtschranke, gewährleistet somit eine genaue Synchronisation zwischen der Bewegung des Objektes und der Erfassung der Etikettencodes, wodurch zuverlässige und konsistente Ergebnisse geliefert werden.

Die Anpassung von Schwenkwinkel und Schwenkgeschwindigkeit kann automatisch erfolgen, beispielsweise bei der ersten Inbetriebnahme des Kamerasystems durch Eingabe spezifischer Anwendungsdaten über eine Benutzeroberfläche der Kameraeinheit. Die Anwendungsdaten können Informationen über Parameter der Fördervorrichtung wie beispielsweise deren Fördergeschwindigkeit und Informationen über die bewegten Objekte wie beispielsweise deren maximale Breite und Höhe beinhalten. Nach Eingabe der Anwendungsdaten kann die Kameraeinheit die Schwenkvorrichtung ohne weitere manuelle Interaktion automatisch parametrisieren. Die Inbetriebnahme und Konfiguration der Kameraeinheit können somit sehr einfach und schnell innerhalb weniger Minuten erfolgen.

Gemäß einer Ausführungsform ist das Antriebsglied durch den Motor zu einer translatorischen Bewegung antreibbar, um ein Verschwenken der Kameraeinheit in einer zur Bewegungsebene des Antriebsglieds parallelen Schwenkebene zu bewirken. Das Antriebsglied und der Motor können insbesondere nach dem Prinzip eines Hubkolbenmotors zusammenwirken. Hierbei wird die Rotationsbewegung einer Welle des Motors auf ein radial um die Drehachse des Motors angeordnetes Schwungrad übertragen, an dessen äußeren Umfang das als Strebe ausgebildete Antriebsglied angreift. Ein im Betrieb befindlicher Motor treibt das Schwungrad zu einer Rotationsbewegung an, wodurch das mit dem Schwungrad verbundebne Antriebsglied zu einer periodischen translatorischen Bewegung mit sich abwechselnden Vorwärts- und Rückwärtsbewegungen angeregt wird. Das Antriebsglied ist mit dem Montagegehäuse verbunden, an welchem die Kameraeinheit mit ihrer dem Kameraobjektiv entgegengesetzten Rückseite fixiert ist. Bei im Betrieb befindlichen Motor bewirkt die periodische translatorische Bewegung des Antriebsglieds ein Verschwenken der Kameraeinheit in einer zur Bewegungsebene des Antriebsglieds parallelen Schwenkebene. Diese Konfiguration der Verbindung von Motor, Antriebsglied und Montagegehäuse ermöglicht eine automatische Schwingbewegung bei gleichbleibender Rotationsrichtung des Motors.

Gemäß einer Ausführungsform ist das Antriebsglied durch den Motor zu einer Rotationsbewegung um seine Längsachse antreibbar, um ein Verschwenken der Kameraeinheit in einer zur Längsachse des Antriebsglieds senkrechten Schwenkebene zu bewirken. Insbesondere kann die Schwenkvorrichtung auch über einen Motor geschwenkt werden, welcher direkt auf eine Schwenkachse der Schwenkvorrichtung angreift. Hierbei wird die Rotationsbewegung einer Welle des Motors direkt auf eine Drehachse des Montagegehäuses übertragen, wodurch das Montagegehäuse und die mit ihrer dem Kameraobjektiv entgegengesetzten Rückseite an dem Montagegehäuse fixierten Kameraeinheit verschwenkt werden. Durch die Änderung der Rotationsrichtung der Welle des Motors können so Drehungen des Montagegehäuses nach links und rechts realisiert werden. Die Steuerung des Motors kann hierbei über Microcontroller oder eine simple und fixe Verdrahtung erfolgen. Dabei können mechanische Schalter, optische Schalter sowie die Nutzung eines Microcontrollers dazu beitragen die entsprechenden Schwenkwinkel der Schwenkvorrichtung zu definieren. Diese Ausführungsform bietet die gleiche Funktionalität wie die oben beschriebene Ausführungsform, beansprucht jedoch einen geringeren Bauraum.

Gemäß einer Ausführungsform ist die Schwenkvorrichtung an einem Konstruktionsprofil befestigbar. Bei dem Konstruktionsprofil kann es ich insbesondere um ein Item Profil, beispielsweise ein 40x40 mm Item Profil, handeln. Die Schwenkvorrichtung ist sowohl horizontal als auch vertikal an dem Konstruktionsprofil befestigbar. Somit kann das durch die Kameraeinheit erfassbare Bildfeld flexibel entweder horizontal oder vertikal vergrößert werden. Die Befestigungsposition ist hierbei variabel wählbar bzw. verschiebbar. Die Möglichkeit, die Schwenkvorrichtung sowohl horizontal als auch vertikal auf einem Konstruktionsprofil zu befestigen, ermöglicht eine große Flexibilität bei der Anpassung an verschiedene Anlagenkonfigurationen, was Zeit und Aufwand spart.

Dabei kann die Schwenkvorrichtung insbesondere durch ein Kugellager gelagert sein. Die Verwendung von Kugellagern sorgt für eine stabile und langlebige Lagerung der Schwenkvorrichtung, was eine reibungslose Bewegung und präzise Ausrichtung der Kameraeinheit ermöglicht und somit die Effizienz und Zuverlässigkeit der Erfassung der Etikettencodes verbessert.

Gemäß einer Ausführungsform ist der Prozessor dazu ausgebildet, in einem Bild der Abfolge von Bildern gleichzeitig zumindest zwei Objekte zu erkennen und zu verfolgen, wobei die Objekte einen minimalen gegenseitigen Abstand von zumindest 50 mm, insbesondere 30 mm, aufweisen. Mittels dieses sogenannten Trackings können Objekte präzise verfolgt und sortiert werden, ohne dass eine zusätzliche, separate Steuer- und Kontrolleinheit erforderlich ist. Tracking ermöglicht die gleichzeitige Verfolgung mehrerer Objekte im Sichtfeld der Kamera, falls ein Mindestabstand von 30 mm bzw. 50 mm zwischen den Objekten gewährleistet ist. Dies erlaubt eine exakte Zuordnung der Etikettencodes zu den entsprechenden Objekten, wodurch eine manuelle Nachbearbeitung bzw. Interaktion von Sortiervorgängen an Fördervorrichtungen reduziert und die Sortiereffizienz maximiert wird. Zudem wird beispielsweise eine zuverlässige Zuweisung bzw. Lieferung an den richtigen Empfänger oder Lagerbereich sichergestellt.

Gemäß einer Ausführungsform umfasst das Kamerasystem weiterhin einen an der Fördervorrichtung angeordneten Encoder, der dazu ausgebildet ist, die Fördergeschwindigkeit der Fördervorrichtung zu ermitteln. Die ermittelte Fördergeschwindigkeit kann beispielsweise genutzt werden, um die Synchronisation des Verschwenkens und des Starts der Bildaufnahmesequenz eines Objektes zu optimieren. Zudem kann bei schwankenden Fördergeschwindigkeiten der Fördervorrichtung ein Encoder zur Geschwindigkeitsüberwachung notwendig sein, um die gleichzeitige Verfolgung mehrerer einzelner Objekte im Sichtfeld der Kameraeinheit mittels Tracking zu ermöglichen.

Gemäß einer Ausführungsform ist die Kameraeinheit dazu ausgebildet, den Fokus des Kameraobjektivs entsprechend dem Wert des aktuellen Schwenkwinkels zu verändern. Da sich der Abstand zwischen der Kameraeinheit und dem Objekt während des Verschwenkens kontinuierlich ändert, ändert sich auch die optimale Fokuseinstellung des Kameraobjektivs fortwährend. Um diesem Umstand Rechnung zu tragen, ist die Kameraeinheit dazu ausgebildet, die Fokuseinstellung des Kameraobjektivs dynamisch zu ändern. Dies kann beispielsweise durch eine Konfigurationsdatei erfolgen, welche die optimalen Fokuseinstellungen für verschiedene Schwenkwinkel vorhält. Die Ermittlung der jeweiligen optimalen Fokuseinstellungen für verschiedene Schwenkwinkel kann insbesondere bei einem "Teach-In" bei Inbetriebnahme des Kamerasystems ermittelt werden. Alternativ ist es auch möglich, dass die Kameraeinheit über Autofokusfähigkeiten verfügt, welche den Fokus des Kameraobjektivs automatisch entsprechend dem aktuellen Schwenkwinkel und dem sich dadurch ändernden Abstand zum Objekt anpasst.

Gemäß einer Ausführungsform weist das Kamerasystem ein Außengehäuse auf, in welchem die Kameraeinheit und die Schwenkvorrichtung angeordnet und aufgenommen sind, wobei das Außengehäuse über zumindest ein transparentes Sichtfenster verfügt, welches es der Kameraeinheit ermöglicht, für jede Ausrichtung der Kameraeinheit zwischen der Ausgangslage und dem maximalen Schwenkwinkel eine Abfolge von Bildern des Objektes aufzunehmen.

Gemäß einer Ausführungsform ist das Sichtfenster planar und gegenüber der Schwenkebene verkippt ausgebildet, so dass das Sichtfenster und die Schwenkebene nicht orthogonal zueinander angeordnet sind. Insbesondere ist das Sichtfenster gegenüber der Schwenkebene derart verkippt ausgebildet, dass das Sichtfenster und die Schwenkebene in einer Richtung senkrecht zur Schwenkebene nicht orthogonal zueinander angeordnet sind und in einer Richtung parallel zur Schwenkebene orthogonal zueinander angeordnet sind. Die Neigung des Sichtfensters trägt dazu bei, innerhalb des Außengehäuses reflektiertes Licht vom Bildsensor wegzuleiten. Das reflektierte Licht kann beispielsweise von einer Beleuchtungseinrichtung herrühren, welche innerhalb des Außengehäuses angeordnet ist und der Beleuchtung des Objektes dient. Der Neigungswinkel ist derart gewählt, dass das Auftreten von Reflexionen der Lichtquelle der Beleuchtungseinrichtung im Bildfeld der Kameraeinheit weitestgehend vermieden werden. Der Neigungswinkel hängt folglich von Parametern wie dem Abstand zwischen der Beleuchtungseinrichtung und dem Sichtfenster ab. Beispielsweise können das Sichtfenster und die Schwenkebene in einer Richtung senkrecht zur Schwenkebene einen Neigungswinkel im Bereich zwischen 10 Grad und 30 Grad und bevorzugt zwischen 15 Grad und 25 Grad einschließen. Zur weiteren Reduktion von unerwünschten Reflexionen kann das Sichtfenster alternativ oder zusätzlich einen Polarisationsfilter aufweisen, welcher das Auftreten von Reflexionen weiter vermindert.

Gemäß einer Ausführungsform weist das Kamerasystem eine weitere Kameraeinheit auf, welche außerhalb des Außengehäuses angeordnet ist, wobei die weitere Kameraeinheit ein statisches, zeitlich unverändertes Bildfeld aufweist und dazu ausgebildet ist, zumindest ein Bild des durch die Fördervorrichtung bewegten Objektes aufzunehmen. Die weitere Kameraeinheit weist ein Kameraobjektiv und einen Bildsensor auf. Die weitere Kameraeinheit ist dazu ausgebildet, ein einzelnes Bild des Objektes oder eine Abfolge von Bildern des Objektes in Form eines Streams aufzunehmen. Die weitere Kameraeinheit kann mit der Kameraeinheit zeitlich synchronisiert sein, so dass die Daten der Kameraeinheit und der weiteren Kamera einen gemeinsamem Zeitstempel aufweisen.

Die weitere Kameraeinheit ermöglicht eine automatische Erfassung aller durch die Fördervorrichtung bewegten Objekte, wodurch ein nachvollziehbarer und transparenter Betrieb des Kamerasystems gewährleistet wird. Die weitere Kameraeinheit kann beispielsweise automatisch den Inhalt einer Palette vor dem Versand, einschließlich aller Artikel und Etiketten, erfassen und somit die Erstellung von Versanddokumenten erleichtern. Die Bilder der weiteren Kameraeinheit können hierbei als visueller Nachweis darüber dienen, was versandt wurde, wodurch bei einem etwaigen Verlust während des Versands Streitigkeiten reduziert werden können. Zudem können die Bilder der weiteren Kameraeinheit bei fehlgeschlagenen Identifizierungen von Etikettencodes Informationen darüber liefern, was der Grund hierfür gewesen sein könnte. Dies kann automatisch erfolgen, wodurch unnötige Verzögerungen oder eine nachträgliche manuelle Bearbeitung vermieden werden können. Zudem bieten die Bilder der weiteren Kameraeinheit eine Ansicht des Transportprozesses in Echtzeit, welche Bediener oder Techniker zur Fernunterstützung des Kamerasystems und zur Optimierung von Konfigurationsparametern nutzen können.

Gemäß einer Ausführungsform ist das Verschwenken der Kameraeinheit durch die Schwenkvorrichtung und der Start der Aufnahme des Bildes oder der Abfolge der Bilder durch die weitere Kameraeinheit durch ein, insbesondere externes, Startsignal initiierbar. Mit anderen Worten ist die Schwenkvorrichtung und die weitere Kameraeinheit über einen Trigger, beispielsweise eine Lichtschranke, triggerbar. Das Startsignal wird ausgelöst, sobald ein durch die Fördervorrichtung bewegtes Objekt die Lichtschranke durchläuft. Unmittelbar vor der Initiierung durch das Startsignal befinden sich die Schwenkvorrichtung und die Kameraeinheit in ihre jeweiligen Ausgangslagen in Ruhe. Das Startsignal triggert die Schwenkbewegung, woraufhin die Schwenkbewegung startet und die Schwenkvorrichtung und die Kameraeinheit sich aus ihren jeweiligen Ausgangslagen herausbewegen. Gleichzeitig beginnt die weitere Kameraeinheit mit der Aufnahme des Bildes oder der Abfolge von Bildern des Objekts. Die weitere Kameraeinheit ist somit mit der Kameraeinheit zeitlich synchronisiert, so dass die Daten der Kameraeinheit und der weiteren Kameraeinheit einen gemeinsamem Zeitstempel aufweisen.

Gemäß einer Ausführungsform ist die Kameraeinheit und/oder die weitere Kameraeinheit von einer wasserdichten, winddichten und atmungsaktiven Membran umgeben. Die Membran kann insbesondere eine Gore-Tex Membran oder eine Membran aus einem Gore-Tex ähnlichen Material sein. Die Membran verhindert eine Betauung der Kameraeinheit bei Anwendungen in kühlen oder kalten Umgebungen, wie beispielsweis in einem Kühl- oder Tiefkühllager.

Die Aufgabe wird zudem durch Etikettenerkennungsvorrichtung gelöst, welche dazu ausgebildet ist, 1D- und/oder 2D-Etikettencodes auf zumindest einem Objekt zu identifizieren und zu decodieren, welches durch eine Fördervorrichtung, insbesondere Förderband, bewegt wird, umfassend ein oben genanntes Kamerasystem. Die Fördervorrichtung kann Bestandteil der Etikettenerkennungsvorrichtung sein.

Die Aussagen zu dem erfindungsgemäßen Kamerasystem gelten entsprechend für die erfindungsgemäße Etikettenerkennungsvorrichtung, dies gilt insbesondere hinsichtlich Vorteilen und Ausführungsformen. Ebenso versteht es sich, dass sämtliche hierin genannten Merkmale miteinander kombinierbar sind, sofern nicht explizit etwas Gegenteiliges angegeben ist.

Die Erfindung wird nachfolgend lediglich beispielhaft anhand der Figuren erläutert.
Fig. 1 zeigt eine schematische Seitenansicht einer Ausführungsform einer erfindungsgemäßen Etikettenerkennungsvorrichtung,
Fig. 2 zeigt eine schematische Draufsicht der Etikettenerkennungsvorrichtung der Fig. 1,
Fig. 3 zeigt eine schematische Unteransicht einer Ausführungsform einer Kameraeinheit der Etikettenerkennungsvorrichtung der Fig.1,
Fig. 4 zeigt eine schematische Ansicht einer Ausführungsform eines Kamerasystems der Etikettenerkennungsvorrichtung der Fig.1, und
Fig. 5 zeigt eine schematische Ansicht einer weiteren Ausführungsform eines Kamerasystems der Etikettenerkennungsvorrichtung der Fig.1, und
Fig. 6 eine schematische Ansicht einer weiteren Ausführungsform eines Kamerasystems für eine Etikettenerkennungsvorrichtung.

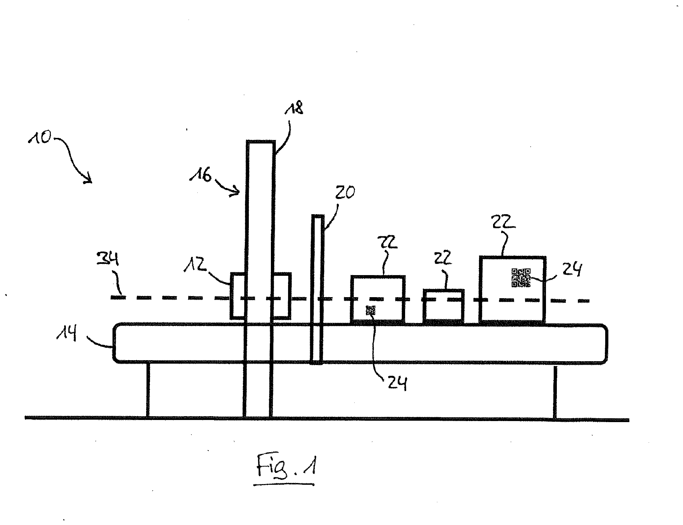

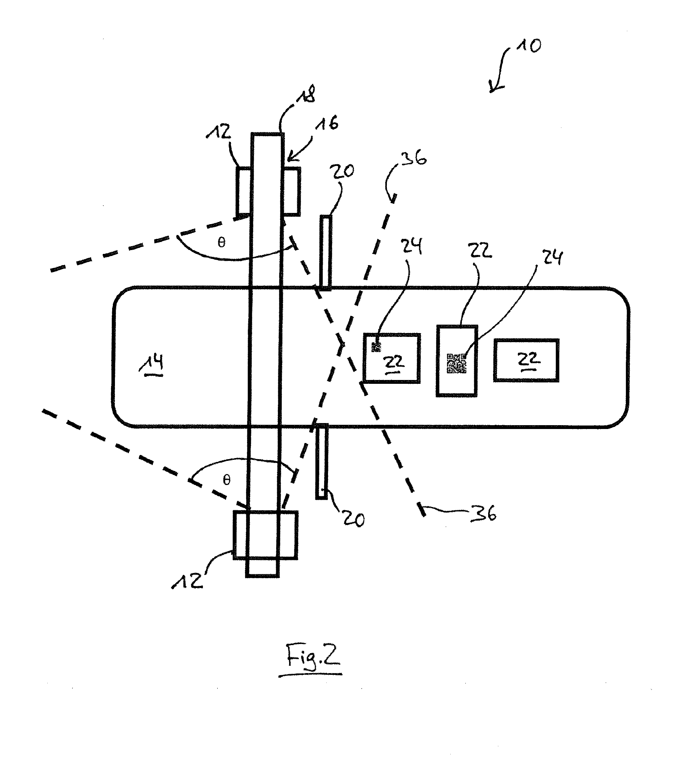

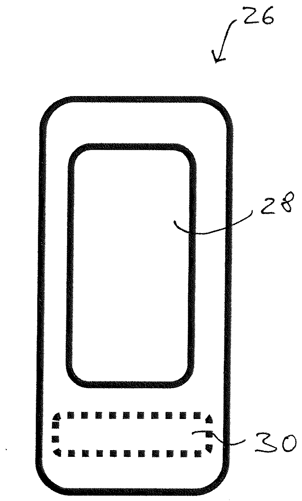

Fig. 1 und 2 zeigen schematische Seiten- und Draufsichten einer Ausführungsform einer erfindungsgemäßen Etikettenerkennungsvorrichtung 10. Die Etikettenerkennungsvorrichtung 10 beinhaltet eine Fördervorrichtung 14, welche in dem gezeigten Beispiel als Förderband ausgebildet ist. Die Etikettenerkennungsvorrichtung 14 weist weiterhin einen Montagerahmen 16 auf, welcher die Fördervorrichtung 14 torförmig umgibt und überspannt. Der Montagerahmen 16 kann hierbei aus miteinander verbundenen Konstruktionsprofilen 18 gebildet sein. Die Etikettenerkennungsvorrichtung 10 weist weiterhin zwei erfindungsgemäße Kamerasysteme 12 auf, welche beidseitig des Förderbands 14 angeordnet und an dem Montagerahmen 16 befestigt sind. Hierbei sind beide Kamerasysteme 12 gleichartig ausgebildet. In der gezeigten Ausführungsform weist die Etikettenerkennungsvorrichtung 10 weiterhin einen Objektdetektor 20 in Form einer Lichtschranke auf, welche am oder nahe am Montagerahmen 16 angeordnet und dazu ausgebildet ist, ein Detektionssignal auszugeben, wenn ein Objekt auf dem Förderband 14 die Lichtschranke 20 passiert.

Auf dem Förderband 14 befindet sich eine Reihe von Objekten 22, welche durch das Förderband 14 in Förderrichtung bewegt bzw. transportiert werden. Bei den Objekten 22 kann es sich beispielsweise um Pakete oder um vollständige Paletten handeln, welche, wie in Fig.1 und 2 ersichtlich, unterschiedliche Höhen und Breiten aufweisen können. Auf jedem der Objekte 22 ist zudem zumindest eine Etikettencode 24 angeordnet, wobei die Etikettencodes 24 an beliebigen Positionen und mit beliebiger Ausrichtung auf den Objekten 22 angebracht sein können. Bei den Etikettencodes 24 kann es sich um 1D- und/oder 2D-Etikettencodes, beispielsweise Barcodes oder QR-Codes handeln.

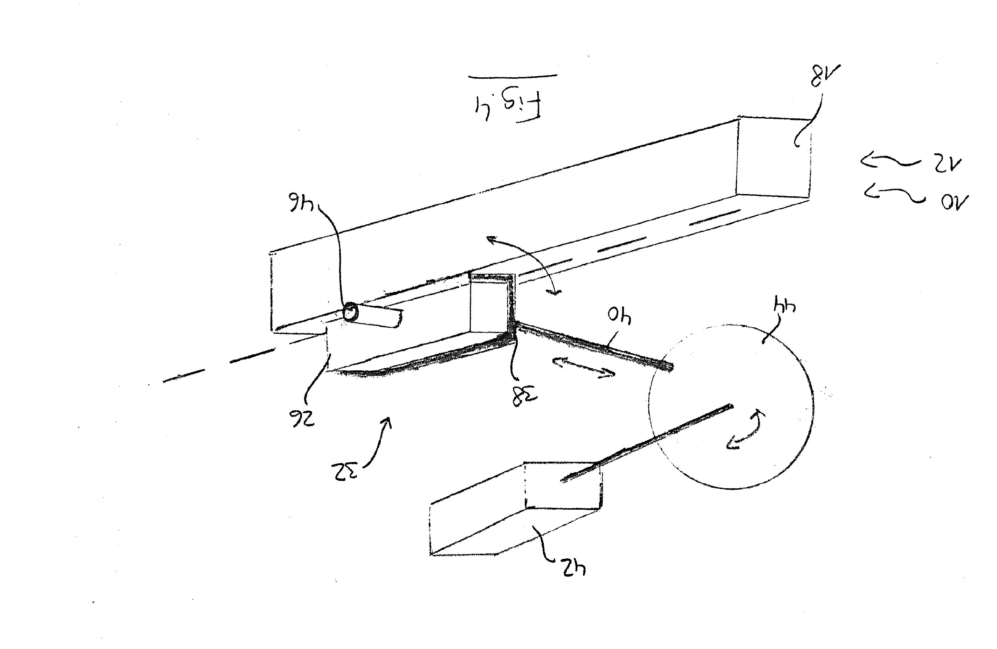

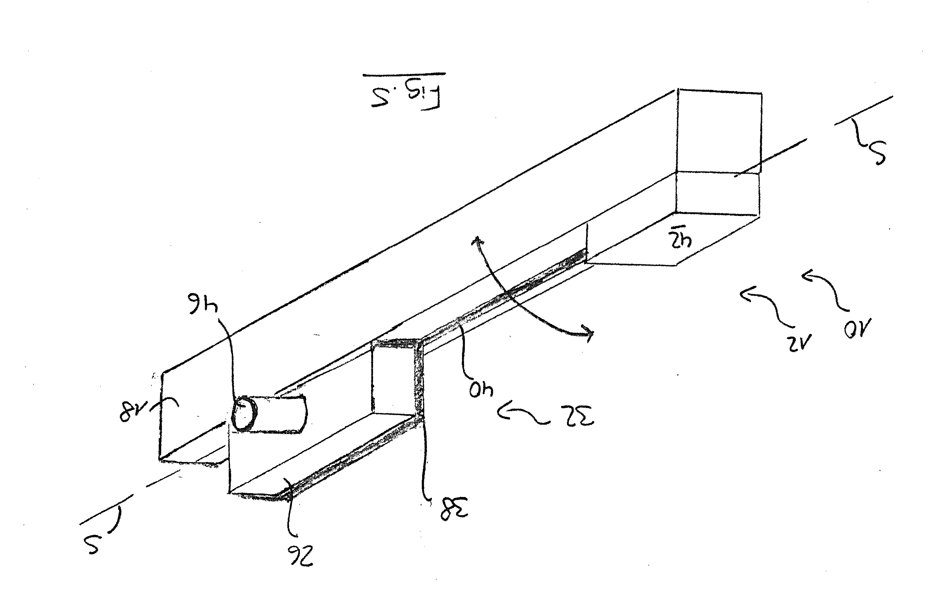

Fig. 3 zeigt eine schematische Unteransicht einer Ausführungsform einer Kameraeinheit 26 der Kamerasysteme 12 der Fig.1 und 2. Die gezeigte Unterseite des Kameraeinheit 12 ist in der Etikettenerkennungsvorrichtung 10 der Fig. 1 und 2 in Richtung des Förderbands 14 ausgerichtet. Die Kameraeinheit 26 weist ein Kameraobjektiv (vgl. Fig. 4 und 5), einen Bildsensor 28 sowie einen Prozessor 30 auf. Die Kameraeinheit 26 ist dazu ausgebildet, eine Abfolge von Bildern der auf dem Förderband 14 bewegten Objekte 22 aufzunehmen. Der Prozessor 30 ist dazu ausgebildet, die aufgenommenen Bilder zu verarbeiten und die auf den Objekten 22 angeordneten Etikettencodes 24 zu erkennen und zu identifizieren.

Das erfindungsgemäße Kamerasystem 12 weist weiterhin eine Schwenkvorrichtung 32 (vgl. Fig. 4 und 5) auf, welche mit der Kameraeinheit 26 lösbar verbunden ist. Die Schwenkvorrichtung 32 wird in Fig. 4 und 5 näher gezeigt und beschrieben. Die Schwenkvorrichtung 32 ist dazu ausgebildet ist, die Kameraeinheit 26 in einer Schwenkebene 34 aus einer Ausgangslage 36 um einen einstellbaren Schwenkwinkel θ zu verschwenken, wobei die Schwenkebene 34 in horizontaler Richtung relativ zum Förderband 14 angeordnet ist. Die Ausgangslage 36 gibt hierbei die Ruheposition der Schwenkvorrichtung 32 und der Kameraeinheit 26 an.

Die Kameraeinheit 26 ist dazu ausgebildet, den Fokus des Kameraobjektivs entsprechend dem Wert des aktuellen Schwenkwinkels zu verändern. Da sich der Abstand zwischen der Kameraeinheit 26 und dem Objekt 22 während des Verschwenkens kontinuierlich ändert, ändert sich auch die optimale Fokuseinstellung des Kameraobjektivs fortwährend. Um diesem Umstand Rechnung zu tragen, ist die Kameraeinheit 26 dazu ausgebildet, die Fokuseinstellung des Kameraobjektivs dynamisch zu ändern. Dies kann beispielsweise durch eine Konfigurationsdatei erfolgen, welche die optimalen Fokuseinstellungen für verschiedene Schwenkwinkel vorhält. Die Ermittlung der jeweiligen optimalen Fokuseinstellungen für verschiedene Schwenkwinkel kann insbesondere bei einem "Teach-In" bei Inbetriebnahme des Kamerasystems 12 ermittelt werden. Alternativ ist es auch möglich, dass die Kameraeinheit 26 über Autofokusfähigkeiten verfügt, welche den Fokus des Kameraobjektivs automatisch entsprechend dem aktuellen Schwenkwinkel und dem sich dadurch ändernden Abstand zum Objekt 22 anpasst.

Durch das Verschwenken kann das jeweilige auf dem Förderband 14 bewegte Objekt 22 durch die Kameraeinheit 26 und deren Bildsensor 28 in der Abfolge von Bildern bei verschiedenen Erfassungswinkeln erfasst werden, wobei sich die verschiedenen Erfassungswinkel aus dem Verschwenken des Bildfeldes der Kameraeinheit 26 durch die Schwenkvorrichtung 32 ergeben. Eine Aufnahme von Bildern des jeweiligen Objektes 22 und die Erfassung der darauf angeordneten Etikettencodes 24 bei verschiedenen Erfassungswinkeln der Kameraeinheit 26 wird somit dadurch erreicht, dass die Kameraeinheit 26 selbst verschwenkt wird. Die Aufnahme von Bildern des jeweiligen Objektes 22 bei verschiedenen Erfassungswinkeln gewährleistet, dass ein auf dem Objekt 22 angeordneter Etikettencode 24 unabhängig von seiner Position und Ausrichtung auf dem Objekt 22 und auch unabhängig von der Größe und Ausrichtung des Objektes 22 in den Bildern erfasst wird. Die Bilder des Objektes 22 werden an den Prozessor 30 übermittelt, der sie verarbeitet und in den Bildern nach auf dem Objekt 22 angeordneten 1D- und/oder 2D-Etikettencodes scannt, diese erkennt und sicher identifiziert.

Das Verschwenken der Kameraeinheit 26 durch die Schwenkvorrichtung 32 wird durch ein Detektionssignal getriggert, welches von dem Objektdetektor 20 bei der Detektion eines Objektes 22 auf dem Förderband 14 an das Kamerasystem 22 übermittelt wird. Da die Schwenkgeschwindigkeit der Schwenkbewegung an die Fördergeschwindigkeit anpassbar ist, kann hiermit eine präzise Synchronisation der Bewegung des Objektes 22 auf dem Förderband 14, der Schwenkbewegung der Kameraeinheit 26 und der Aufnahme der Abfolge von Bildern erzielt werden. Durch die Synchronisation kann die Kameraeinheit 26 dem Objekt 22 folgen und während des Verschwenkens kontinuierlich in ihrem Blickfeld halten. Die dabei erzeugte Abfolge von Bildern zeigt folglich das Objekt 22 bei sich kontinuierlich verändernden Blickwinkeln, wodurch sich die an dem Objekt 22 angeordneten Etikettencodes 24 effizient und zuverlässig erfassen lassen.

Zwei Ausführungsformen eines Kamerasystems 12 und insbesondere deren Schwenkvorrichtungen 32 werden in Fig. 4 und 5 in schematischen Ansichten gezeigt. Die Schwenkvorrichtung 32 beider Ausführungsformen weisen ein Montagegehäuse 38, ein Antriebsglied 40 und einen Elektromotor 42 auf. Die Kameraeinheit 26 ist an dem jeweiligen Montagegehäuse 38 mittels Befestigungselementen 42 lösbar fixiert. Das Antriebsglied 40 ist mit dem Montagegehäuse 38 verbunden und durch den Elektromotor 42 antreibbar, um ein Verschwenken des Montagegehäuses 38 und der Kameraeinheit 26 zu bewirken. Das Verschwenken der Kameraeinheit 26 wird somit über ein Verschwenken des jeweiligen Montagegehäuses 38 bewirkt, wobei das Antriebsglied 40 mit dem Montagegehäuse 38 in einer Wirkverbindung steht. Das Antriebsglied 40 verschwenkt somit bei Antrieb durch den Elektromotor das Montagegehäuse 38 in der Schwenkebene 34. Die sich orthogonal zur Schwenkebene 34 erstreckende Schwenkachse S ist außerhalb der Kameraeinheit 26 angeordnet und verläuft in den Ausführungsformen der Fig. 4 und 5 entlang einer Längsachse des Montagegehäuses 38.

In der Ausführungsform der Fig. 4 ist das Antriebsglied 40 durch den Elektromotor 42 zu einer translatorischen Bewegung antreibbar, um ein Verschwenken der Kameraeinheit 26 in einer zur Bewegungsebene des Antriebsglieds 40 parallelen Schwenkebene 34 zu bewirken. In dieser Ausführungsform wirken das Antriebsglied 40 und der Elektromotor 42 nach dem Prinzip eines Hubkolbenmotors zusammen. Hierbei wird die Rotationsbewegung einer nicht gezeigten Welle des Elektromotors auf ein radial um die Drehachse des Elektromotors angeordnetes Schwungrad 44 übertragen, an dessen äußeren Umfang das als Strebe ausgebildete Antriebsglied 40 angreift. Ein im Betrieb befindlicher Elektromotor treibt das Schwungrad 44 zu einer Rotationsbewegung an, wodurch das mit dem Schwungrad 44 verbundebne Antriebsglied 40 zu einer periodischen translatorischen Bewegung mit sich abwechselnden Vorwärts- und Rückwärtsbewegungen angeregt wird. Das Antriebsglied 40 ist mit dem Montagegehäuse 38 verbunden, an welchem die Kameraeinheit 26 mit ihrer dem Kameraobjektiv 46 entgegengesetzten Rückseite fixiert ist. Bei im Betrieb befindlichen Elektromotor bewirkt die periodische translatorische Bewegung des Antriebsglieds 40 ein Verschwenken der Kameraeinheit 26 in einer zur Bewegungsebene des Antriebsglieds 40 parallelen Schwenkebene 34. Diese Konfiguration der Verbindung von Elektromotor 42, Antriebsglied 40 und Montagegehäuse 38 ermöglicht eine automatische Schwingbewegung bei gleichbleibender Rotationsrichtung des Elektromotors. Die Kameraeinheit 26 wird somit nach erfolgter Verschwenkung um den Schwenkwinkel θ in die Ausgangslage 36 zurückgeführt.

In der Ausführungsform der Fig. 5 ist das Antriebsglied 40 durch den Elektromotor 42 zu einer Rotationsbewegung um seine Längsachse antreibbar, um ein Verschwenken der Kameraeinheit 26 in einer zur Längsachse des Antriebsglieds 40 senkrechten Schwenkebene 34 zu bewirken. Hierbei wird die Rotationsbewegung einer Welle des Elektromotors 42 direkt auf eine Drehachse des Montagegehäuses 38 übertragen, wodurch das Monategehäuse 26 und die mit ihrer dem Kameraobjektiv 46 entgegengesetzten Rückseite an dem Montagegehäuse 38 fixierten Kameraeinheit 26 verschwenkt werden. Durch eine Änderung der Rotationsrichtung der Welle des Elektromotors 42 können somit Drehungen des Montagegehäuses 38 nach links und rechts realisiert werden. Die Steuerung des Elektromotors 44 kann über Microcontroller oder eine Verdrahtung erfolgen. Dabei können mechanische Schalter, optische Schalter sowie die Nutzung eines Microcontrollers dazu beitragen die entsprechenden Schwenkwinkel θ der Schwenkvorrichtung 32 zu definieren. Diese Ausführungsform bietet die gleiche Funktionalität wie die Ausführungsform der Fig. 4, beansprucht jedoch einen geringeren Bauraum.

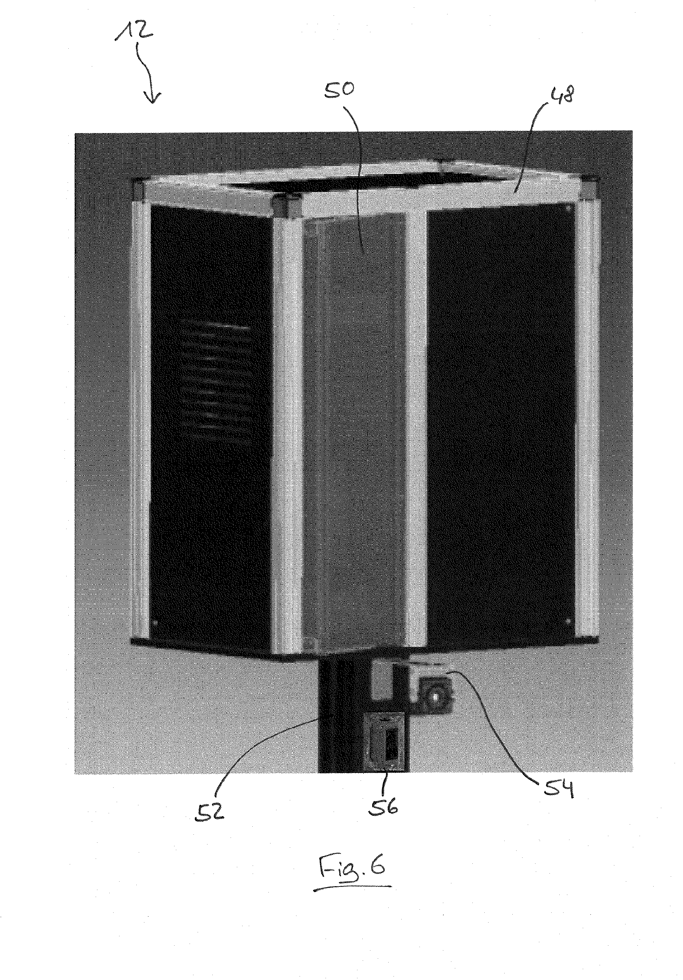

Fig. 6 zeigt eine schematische Ansicht einer weiteren Ausführungsform eines Kamerasystems 12 für eine Etikettenerkennungsvorrichtung 10. Das Kamerasystem 12 ist seitlich zu einer nicht gezeigten Fördervorrichtung angeordnet. Das Kamerasystem 12 weist ein Außengehäuse 48 auf, in welchem eine Kameraeinheit und eine Schwenkvorrichtung angeordnet und aufgenommen sind. Das Außengehäuse 48 verfügt über zumindest ein transparentes Sichtfenster 50, welches es der Kameraeinheit ermöglicht, für jede Ausrichtung zwischen der Ausgangslage und dem maximalen Schwenkwinkel eine Abfolge von Bildern eines durch die Fördervorrichtung bewegten Objektes aufzunehmen.

Das Außengehäuse 48 ist an einem Konstruktionsprofil 52 befestigt. Das Konstruktionsprofil 52 kann eine nicht gezeigte Befestigungsvorrichtung, beispielsweise eine Befestigungsplatte, aufweisen, welche es ermöglicht, das Außengehäuse 48 vibrationssicher in einer Arbeitsumgebung zu fixieren. Das Außengehäuse 48 ist an dem Konstruktionsprofil 52 drehbar gelagert, um das Kamerasystem 12 in verschiedenen Winkeln zu einer Fördervorrichtung ausrichten und fixieren zu können.

Die Schwenkvorrichtung 32 ist dazu ausgebildet, die Kameraeinheit in einer parallel zum Konstruktionsprofil 52 angeordneten Schwenkebene aus einer Ausgangslage um einen Schwenkwinkel zu verschwenken. Das Sichtfenster 50 ist planar und gegenüber der Schwenkebene verkippt ausgebildet, so dass das Sichtfenster 50 und die Schwenkebene nicht orthogonal zueinander angeordnet sind. Insbesondere ist das Sichtfenster 50 gegenüber der Schwenkebene 52 derart verkippt ausgebildet, dass das Sichtfenster 50 und die Schwenkebene in einer Richtung senkrecht zur Schwenkebene nicht orthogonal zueinander angeordnet sind und in einer Richtung parallel zur Schwenkebene orthogonal zueinander angeordnet sind. Die Neigung des Sichtfensters 50 trägt dazu bei, innerhalb des Außengehäuses 48 reflektiertes Licht vom Bildsensor wegzuleiten. Beispielsweise können das Sichtfenster 52 und die Schwenkebene in einer Richtung senkrecht zur Schwenkebene einen Neigungswinkel im Bereich zwischen 10 Grad und 30 Grad und bevorzugt zwischen 15 Grad und 25 Grad einschließen. Zur weiteren Reduktion von unerwünschten Reflexionen kann das Sichtfenster 50 einen Polarisationsfilter aufweisen, welcher das Auftreten von Reflexionen weiter vermindert.

Das Kamerasystem 12 weist eine weitere Kameraeinheit 54 auf, welche außerhalb des Außengehäuses 48 am Konstruktionsprofil 52 angeordnet ist. Die weitere Kameraeinheit 54 weist ein statisches, zeitlich unverändertes Bildfeld auf und ist dazu ausgebildet ist, zumindest ein Bild des durch die Fördervorrichtung bewegten Objektes aufzunehmen. Hierbei kann die weitere Kameraeinheit 54 dazu ausgebildet sein, ein einzelnes Bild des Objektes oder eine Abfolge von Bildern des Objektes in Form eines Streams aufzunehmen.

Das vertikale Verschwenken der Kameraeinheit durch die Schwenkvorrichtung und der Start der Aufnahme des Bildes oder der Abfolge der Bilder durch die weitere Kameraeinheit 54 wird durch ein externes Startsignal initiiert. Hierzu ist an dem Konstruktionsprofil 52 ein Objektdetektor in Form einer Lichtschranke 56 angeordnet. Das Startsignal wird ausgelöst, sobald ein durch die Fördervorrichtung bewegtes Objekt die Lichtschranke 56 durchläuft. Unmittelbar vor der Initiierung durch das Startsignal befinden sich die Schwenkvorrichtung und die Kameraeinheit in ihre jeweiligen Ausgangslagen in Ruhe. Das Startsignal triggert die Schwenkbewegung, woraufhin die Schwenkbewegung startet und die Schwenkvorrichtung und die Kameraeinheit sich aus ihren jeweiligen Ausgangslagen herausbewegen. Gleichzeitig beginnt die weitere Kameraeinheit 54 mit der Aufnahme des Bildes oder der Abfolge von Bildern des Objektes. Die weitere Kameraeinheit 54 ist somit mit der Kameraeinheit zeitlich synchronisiert, so dass die Daten der Kameraeinheit 26 und der weiteren Kameraeinheit 54 einen gemeinsamem Zeitstempel aufweisen.

Kamerasysteme 12 mit Schwenkvorrichtungen 32 der gezeigten Ausführungsformen ermöglichen die vollständige Erfassung von Objekten 22 auf einem Förderband 14 unabhängig von deren Höhe oder Breite und die vollständige und zuverlässige Erfassung von an den Objekten 22 angeordneten Etikettencodes 14.

### Bezugszeichen

- 10: Etikettenerkennungsvorrichtung
- 12: Kamerasystem
- 14: Fördervorrichtung
- 16: Montagerahmen
- 18: Konstruktionsprofil
- 20: Objektdetektor
- 22: Objekt
- 24: Etikettencode
- 26: Kameraeinheit
- 28: Bildsensor
- 30: Prozessor
- 32: Schwenkvorrichtung
- 34: Schwenkebene
- 36: Ausgangslage
- 38: Montagegehäuse
- 40: Antriebsglied
- 42: Elektromotor
- 44: Schwungrad
- 46: Kameraobjektiv
- 48: Außengehäuse
- 50: Sichtfenster
- 52: Konstruktionsprofil
- 54: weitere Kameraeinheit
- 56: Objektdetektor

- Schwenkwinkel: θ
- Schwenkachse: S

## Patentansprüche

1. Kamerasystem (12) für eine Etikettenerkennungsvorrichtung (10), wobei das Kamerasystem (10) dazu ausgebildet ist, 1D- und/oder 2D-Etikettencodes (24) auf zumindest einem Objekt (22) zu erkennen, welches durch eine Fördervorrichtung (14) bewegt wird,
wobei das Kamerasystem (12) eine Kameraeinheit (26) mit einem Kameraobjektiv (46) und einem Bildsensor (28) sowie einen Prozessor (30) aufweist,
wobei die Kameraeinheit (26) dazu ausgebildet ist, eine Abfolge von Bildern des Objektes (22) aufzunehmen,
wobei der Prozessor (30) dazu ausgebildet ist, die Bilder zu verarbeiten und auf dem Objekt angeordnete 1D- und/oder 2D-Etikettencodes zu erkennen, **dadurch gekennzeichnet, dass**
das Kamerasystem (12) eine Schwenkvorrichtung (32) aufweist, welche mit der Kameraeinheit (26), insbesondere lösbar, verbunden ist und dazu ausgebildet ist, die Kameraeinheit (26) in zumindest einer Schwenkebene (34) aus einer Ausgangslage (36) um einen Schwenkwinkel (θ) zu verschwenken.

2. Kamerasystem (12) nach Anspruch 1, wobei eine der Schwenkebene (34) zugeordnete Schwenkachse (S) außerhalb der Kameraeinheit (26) angeordnet ist.

3. Kamerasystem (12) nach Anspruch 1 oder 2, wobei die Schwenkvorrichtung (32) ein Montagegehäuse (38), ein Antriebsglied (40) und einen Motor (42), insbesondere Elektromotor, aufweist, und wobei die Kameraeinheit (26) an dem Montagegehäuse (38), insbesondere lösbar, fixiert ist, das Antriebsglied (40) mit dem Montagegehäuse (38) verbunden ist und das Antriebsglied (40) durch den Motor (42) antreibbar ist, um ein Verschwenken des Montagegehäuses (38) und der Kameraeinheit (26) zu bewirken.

4. Kamerasystem (12) nach einem der vorhergehenden Ansprüche, wobei die Schwenkvorrichtung (32) dazu ausgebildet ist, die Kameraeinheit (12) nach erfolgter Verschwenkung um den Schwenkwinkel (θ) in die Ausgangslage (26) zurückzuführen.

5. Kamerasystem (12) nach einem der vorhergehenden Ansprüche, wobei der Schwenkwinkel θ vorgebbar oder vorgegeben ist.

6. Kamerasystem (12) nach einem der vorhergehenden Ansprüche, wobei die Schwenkvorrichtung (32) dazu ausgebildet ist, die Kameraeinheit (26) in der Schwenkebene (34) mit einer vorgegebenen oder vorgebbaren Schwenkgeschwindigkeit zu verschwenken, insbesondere wobei die Schwenkgeschwindigkeit an eine Fördergeschwindigkeit der Fördervorrichtung (14) anpassbar ist.

7. Kamerasystem (12) nach einem der vorhergehenden Ansprüche, wobei ein maximaler Schwenkwinkel 120 Grad, insbesondere 150 oder 180 Grad beträgt.

8. Kamerasystem (12) nach einem der vorhergehenden Ansprüche, wobei das Verschwenken der Kameraeinheit (26) durch die Schwenkvorrichtung (32) durch ein, insbesondere externes, Startsignal initiierbar ist.

9. Kamerasystem (12) nach Anspruch 8, wobei das Startsignal durch das bewegte Objekt (22) auslösbar ist.

10. Kamerasystem (12) nach einem der vorhergehenden Ansprüche, wobei das Antriebsglied (40) durch den Motor (42) zu einer translatorischen Bewegung antreibbar ist, um ein Verschwenken der Kameraeinheit (26) in einer zur Bewegungsebene des Antriebsglieds (40) parallelen Schwenkebene zu (34) bewirken.

11. Kamerasystem (12) nach einem der Ansprüche 1 bis 8, wobei das Antriebsglied (40) durch den Motor (42) zu einer Rotationsbewegung um seine Längsachse antreibbar ist, um ein Verschwenken der Kameraeinheit (26) in einer zur Längsachse des Antriebsglieds (40) senkrechten Schwenkebene (34) zu bewirken.

12. Kamerasystem (12) nach einem der vorhergehenden Ansprüche, wobei die Schwenkvorrichtung (32) an einem Konstruktionsprofil (18) befestigbar ist.

13. Kamerasystem (12) nach einem der vorhergehenden Ansprüche, wobei der Prozessor (30) dazu ausgebildet ist, in einem Bild der Abfolge von Bildern gleichzeitig zumindest zwei Objekte (22) zu erkennen und zu verfolgen, wobei die Objekte (22) einen minimalen gegenseitigen Abstand von zumindest 50 mm, insbesondere 30 mm, aufweisen.

14. Kamerasystem (12) nach einem der vorhergehenden Ansprüche, weiterhin umfassend einen an der Fördervorrichtung (14) angeordneten Encoder, der dazu ausgebildet ist, die Fördergeschwindigkeit der Fördervorrichtung (14) zu ermitteln.

15. Etikettenerkennungsvorrichtung (10), welche dazu ausgebildet ist, 1D- und/oder 2D-Etikettencodes auf zumindest einem Objekt (22) zu identifizieren und zu decodieren, welches durch eine Fördervorrichtung (14), insbesondere Förderband, bewegt wird, umfassend ein Kamerasystem (12) nach einem der Ansprüche 1 bis 14.
